# EUROPÄISCHE PATENTSCHRIFT

(11) **EP 2 065 993 B1**
(45) Veröffentlichungstag und Bekanntmachung des Hinweises auf die Patenterteilung: **28.09.2016**
(21) Anmeldenummer: 07023050.3
(22) Anmeldetag: 28.11.2007
(51) Int. Cl.: H02M 1/32

(54) **Spannungswandleranordnung**
Voltage transformer assembly
Système de convertisseur de tension

(43) Veröffentlichungstag der Anmeldung: 03.06.2009
(73) Patentinhaber: Siemens Schweiz AG, 8047 Zürich (CH)
(72) Erfinder: Wenning, Guido, 8049 Zürich (CH)
(74) Vertreter: Maier, Daniel Oliver

(56) Entgegenhaltungen:
- WO-A-98/27641
- JP-A- 2007 043 822

## Beschreibung

Die Erfindung betrifft eine Spannungswandleranordnung mit einer vorgeschalteten Sicherung.

Es ist bekannt, Sicherungen, u.a. Schmelzsicherungen, zum Schutz von Wandlern vor thermischer Überlastung einzusetzen. Darüber hinaus ist es notwendig, bei Bahnanlagen die gezielte Abschaltung der Stromspeisung bei Kurzschlüssen in das Gesamtverhalten zu integrieren. Auch bei Spannungsverlust muss die Einnahme eines definierten Zustandes ermöglicht werden.

Grundsätzlich sind kaslsadierte Spannungswandler aus dem Stand der Technik prinzipiell bekannt. In der internationalen Patentaameldung WO 98/027 641 A wird die Verwendung eines Kurzschliessers im Gleichspannungszwischenkreis zwischen zwei Konvertern gezeigt, wobei die Sicherungen dem ersten Konverter ("Step-down converter") vorgeschaltet sind und die Kurzschluss von diesem Konverter übertragen wird. In der japanischen Patentanmeldung JP 2007-043822 A wird die Verwendung eines Kurzschliessers in einem Gleichstromkreis zwischen einer vorgeschalteten Sicherung und einem nachgeschalteten DC-DC-Konverter gezeigt, wobei eine Überspannung am Ausgang des DC-DC-Konverters erfasst wird und zum Zünden des Kurzschliessers (mit anschliessendem Auslösen der Sicherung führt.

Der Erfindung liegt die Aufgabe zugrunde, eine kurzschlussfeste Spannungswandleranordnung zu schaffen, die eine sichere Abschaltung der Spannungswandleranordnung bei Überspannung am Ausgang sicherstellt.

Erfindungsgemäß wird die Aufgabe durch die Merkmale des Anspruches 1 gelöst. Dabei liegt die Eingangsspannung an einem Eingang eines ersten getakteten Spannungswandlers und an einer Sicherung, die dem anderen Eingang des ersten getakteten Spannungswandlers vorgeschaltet ist, an. Die Ausgänge des ersten getakteten Spannungswandlers sind auf die Eingänge eines zweiten getakteten und geregelten Spannungswandlers geführt, wobei ein Zündelement zur Erzeugung eines Kurzschlusses bei anliegendem Zündimpuls an seinem Zündeingang zwischen die Verbindungsleitungen zwischen den beiden getakteten Spannungswandlern geschaltet ist. An die Ausgänge des zweiten getakteten Spannungswandlers ist ein Überspannungsdetektor angeschlossen, der im Überspannungsfall einen Zündimpuls an seinem Steuerausgang erzeugt, der mit dem Zündeingang des Zündelementes verbunden ist.

Es erfolgt also die Auslösung einer Sicherung auf der Primärseite der Spannungswandleranordnung, bedingt durch die Überspannungsdetektion auf der Sekundärseite. Ermöglicht wird die Abschaltung durch einen sekundären Zwischenkreis, der keine Strombegrenzung besitzt, so dass der Kurzschluss auf die Primärseite übertragen wird. Die Ausgangsspannung der Spannungswandleranordnung wird durch den strombegrenzenden zweiten Spannungswandler aus der sekundären Zwischenkreisspannung generiert. Folglich ist die Ausgangsspannung kurzschlussfest.

Vorteilhafte Ausgestaltungen der Erfindung sind in den Unteransprüchen dargelegt.

So ist es vorteilhaft, wenn der erste getaktete Spannungswandler so ausgeführt ist, dass seine Ausgänge eine galvanisch getrennte Zwischenkreisspannung führen.

Außerdem ist es vorteilhaft, im Falle einer Spannungsunterbrechung bei der Eingangsspannung die notwendige Energie zum Ansprechen der Sicherung in einem Stützkondensator zu speichern, der parallel zur Eingangsgleichspannung geschaltet ist.

Vorteilhaft ist es auch, den ersten getakteten Spannungswandler als Halbbrückenkonverter oder als Resonanzwandler auszuführen.

Weiterhin ist es vorteilhaft, den zweiten getakteten Spannungswandler als Längsregler oder als Abwärtswandler auszuführen.

Darüber hinaus ist es vorteilhaft, das Zündelement als Thyristor ausgeführt ist.

Anschließend wird die Erfindung in einem Ausführungsbeispiel anhand der Zeichnung erläutert.

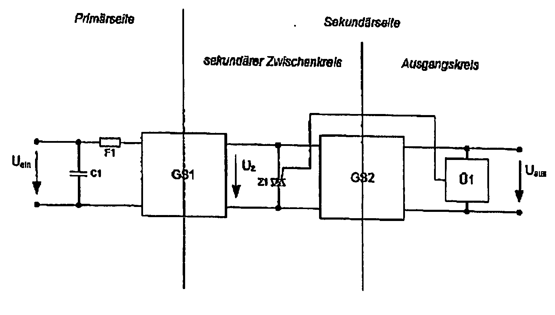

Dabei zeigt
- FIG 1: ein Blockschaltbild der Spannungswandleranordnung

Überspannungen dürfen in sicherheitsrelevanten Spannungsversorgungssystemen nicht auftreten, da diese zu Zerstörungen in elektrischen Schaltungen führen, aus denen sich Fehlfunktionen bis hin zu Gefährdungen von schaltungstechnischen Einrichtungen ergeben können.

Zur Realisierung einer kurzschlussfesten Spannungswandleranordnung in einem Gleichspannungsnetz mit sicherheitsgerichteter Abschaltfunktion im Fall einer Überspannungsbedingung am Ausgang wird ein zweistufiges Wandlerkonzept gewählt.

Für die erste Stufe ist ein erster getakteter Spannungswandler GS1 vorgesehen, der eine galvanisch getrennte sekundäre Zwischenkreisspannung U_{z} erzeugt, aus der ein zweiter, nachgeschalteter, getakteter und geregelter Spannungswandler GS2 gespeist wird. Der erste Spannungswandler GS1 ist als Halbbrückenkonverter ausgeführt. Möglich ist auch der Einsatz eines Resonanzwandlers. Der zweite getaktete Spannungswandler GS2 ist als Längsregler oder Abwärtswandler ausgeführt. Die Kurzschlussfestigkeit der Ausgangsgleichspannung Uₐᵤₛ am Ausgang des zweiten getakteten Spannungswandlers GS2 wird durch dessen Regeleigenschaften gewährleistet. An den Ausgängen des zweiten Spannungswandlers GS2 ist auch ein Überspannungsdetektor Ü1 angeschlossen, der bei einer festgelegten Überspannung an seinem Steuerausgang einen Zündimpuls erzeugt. Im sekundären Zwischenkreis ist mit den Ausgängen des ersten Spannungswandlers GS1 bzw. mit den Eingängen des zweiten Spannungswandlers GS2 ein im Normalbetrieb nicht leitendes Zündelement Z1, z.B. ein Thyristor, verbunden, dessen Zündeingang an den Steuerausgang des Überspannungsdetektors Ü1 angeschlossen ist.

Die Kurzschlussfestigkeit der Ausgangsspannung Uₐᵤₛ wird durch die Regeleigenschaften des zweiten Spannungswandlers GS2 gewährleistet.

Tritt am Ausgang des zweiten Spannungswandlers GS2 eine Überspannung auf, so wird sie vom Überspannungsdetektor Ül erkannt, der dann einen Zündimpuls erzeugt. Dieser Zündimpuls wird vom Steuerausgang an den Zündeingang des Zündelementes Z1 übertragen, wodurch dieses leitend wird und ein unwiderruflicher Kurzschluss an der Zwischenkreisspannung U_{z} erzeugt wird. Eine Löschung kann erst bei Stromnulldurchgang erfolgen. Dadurch kann der Gleichstromkurzschluss nicht eigenständig gelöscht werden.

Die definitive Abschaltung der Spannungswandleranordnung erfolgt dann durch eine Sicherung Fl auf der Primärseite, die einem Eingang des ersten Spannungswandlers GS1 vorgeschaltet ist, da an dieser Stelle die Nennströme kleiner als auf der Sekundärseite sind.

Im Fall einer Unterbrechung der von außen zugeführten Eingangsgleichspannung Uₑᵢₙ ist im Primärkreis die nötige Energie zum Ansprechen der Sicherung Fl in einem primären Stützkondensator Cl gespeichert, der parallel zur Eingangsgleichspannung Uₑᵢₙ geschaltet ist.

## Patentansprüche

1. Spannungswandleranordnung mit einer vorgeschalteten Sicherung (Fl), wobei
a) eine Eingangsgleichspannung (Uₑᵢₙ) an einem Eingang eines ersten getakteten, einen Kurzschluss übertragenden Spannungswandlers (GS1) und an der Sicherung (F1), die dem anderen Eingang des ersten getakteten Spannungswandlers (GS1) vorgeschaltet ist, anliegt,
b) die Ausgänge des ersten getakteten Spannungswandlers (GS1) mit einer Zwischenkreisspannung (U_{z}) auf die Eingänge eines zweiten getakteten und geregelten Spannungswandlers (GS2) geführt sind,
c) ein Zündelement (Z1) zur Erzeugung eines Kurzschlusses bei anliegendem Zündimpuls an seinem Zündeingang zwischen die Verbindungsleitungen zwischen den beiden getakteten Spannungswandlern (GS1, GS2) geschaltet ist; und
d) an die eine Ausgangsgleichspannung (Uₐᵤₛ) führenden Ausgänge des zweiten getakteten Spannungswandlers (GS2) ein Überspannungsdetektor (Ü1) angeschlossen ist, der im Überspannungsfall einen Zündimpuls an seinem Steuerausgang erzeugt, der mit dem Zündeingang des Zündelementes (Z1) verbunden ist

2. Getaktete Spannungswandleranordnung nach Anspruch 1, **dadurch gekenntzeichnet,** dass die Ausgänge des ersten getakteten Spannungswandlers (GS1) eine galvanisch getrennte Zwischenkreisspannung (U_{z}) führen.

3. Getaktete Spannungswandleranordnung nach Anspruch 1, **dadurch gekennzeichnet, dass** parallel zur Eingangsgleichspannung (Uₑᵢₙ) ein Stützkondensator (Cl) geschaltet ist.

4. Getaktete Spannungswandleranordnung nach Anspruch 1, **dadurch gekennzeichnet, dass** der erste getaktete Spannungswandler (GS1) als Halbbrückenkonverter ausgeführt ist.

5. Getaktete Spannungswandleranordnung nach Anspruch 1, **dadurch gekennzeichnet, dass** der erste getaktete Spannungswandler (GS1) als Resonanzwandler ausgeführt ist.

6. Getaktete Spannungswandleranordnung nach Anspruch 1, **dadurch gekennzeichnet, dass** der zweite getaktete Spannungswandler (GS2) als Längsregler ausgeführt ist.

7. Getaktete Spannungswandleranordnung nach Anspruch 1, **dadurch gekennzeichnet, dass** der zweite getaktete Spannungswandler (GS2) als Abwärtswandler realisiert ist.

8. Getaktete Spannungswandleranordnung nach Anspruch 1, **dadurch gekennzeichnet, dass** das Zündelement (Z1) als Thyristor realisiert ist.

9. Getaktete Spannungswandleranordnung nach Anspruch 1, **dadurch gekennzeichnet, dass** ein Gleichrichter zum Einsatz der Spannungswandleranordnung an einem Wechselstromnetz vorgeschaltet ist.

## Claims

1. Voltage transformer assembly with an upstream fuse (F1), wherein
a) an input direct current voltage (Uᵢₙ) is in contact with an entry of a first clocked voltage transformer (GS1), transmitting a short circuit, and the fuse (F1), that is upstream of the other inlet of the first clocked voltage transformer (GS1),
b) the outlets of the first clocked voltage transformer (GS1) are led via a intermediate circuit voltage (U_{Z}) to the inlets of a second clocked and regulated voltage transformer (GS2),
c) a firing unit (Z₁) is connected at its firing inlet between the connecting lines between the two clocked voltage transformers (GS1, GS2) for producing a short circuit upon an adjacent firing impulse.
d) an overvoltage detector (Ü1) is connected to the outlets of the second clocked voltage transformer (GS2), having a output direct current voltage (Uₒᵤₜ), and producing in case of an overvoltage a firing impulse at its control output, which is connected to the firing inlet of the firing unit (Z₁).

2. Clocked voltage transformer assembly according to claim 1,
**characterized in that** the outlets of the first clocked voltage transformer (GS1) carry a galvanically isolated intermediate circuit voltage (Uz).

3. Clocked voltage transformer assembly according to claim 1,
**characterized in that** a decoupling capacitor (C1) is connected parallel to the input direct current voltage (Uᵢₙ).

4. Clocked voltage transformer assembly according to claim 1,
**characterized in that** the first clocked voltage transformer (GS1) is implemented as a half bridge converter.

5. Clocked voltage transformer assembly according to claim 1,
**characterized in that** the first clocked voltage transformer (GS1) is implemented as a resonance transformer.

6. Clocked voltage transformer assembly according to claim 1,
**characterized in that** the second clocked voltage transformer (GS2) is realized as a longitudinal controller.

7. Clocked voltage transformer assembly according to claim 1, **characterized in that** the second clocked voltage transformer (GS2) is realized as a buck converter.

8. Clocked voltage transformer assembly according to claim 1,
**characterized in that** the firing unit (Z₁) is realized as a thyrister.

9. Clocked voltage transformer assembly according to claim 1,
**characterized in that** a rectifier is connected upstream of a alternating current system for deploying the voltage transformer assembly.

## Revendications

1. Système de convertisseur de tension avec un fusible (F1) connecté en amont, dans lequel
a) une tension continue d'entrée (Uₑᵢₙ) est appliquée à une entrée d'un premier convertisseur de tension à découpage (GS1) transmettant un court-circuit et au fusible (F1), qui est connecté en amont de l'autre entrée du premier convertisseur de tension à découpage (GS1),
b) les sorties du premier convertisseur de tension à découpage (GS1) sont menées, avec une tension de circuit intermédiaire (U_{z}), aux entrées d'un deuxième convertisseur de tension à découpage et régulé (GS2),
c) un élément d'allumage (Z1) pour la production d'un court-circuit en présence d'une impulsion d'allumage à son entrée d'allumage est connecté entre les conducteurs de liaison entre les deux convertisseurs de tension à découpage (GS1, GS2), et
d) un détecteur de surtension (Ü1) est raccordé aux sorties du deuxième convertisseur de tension à découpage (GS2) conduisant une tension continue de sortie (Uₐᵤₛ), lequel en cas de surtension produit une impulsion d'allumage à sa sortie de commande, qui est raccordée à l'entrée d'allumage de l'élément d'allumage (Z1).

2. Système de convertisseur de tension à découpage selon la revendication 1, **caractérisé en ce que** les sorties du premier convertisseur de tension à découpage (GS1) conduisent une tension de circuit intermédiaire (U_{z}) galvaniquement séparée.

3. Système de convertisseur de tension à découpage selon la revendication 1, **caractérisé en ce qu'**un condensateur de soutien (C1) est monté en parallèle sur la tension continue d'entrée (Uₑᵢₙ).

4. Système de convertisseur de tension à découpage selon la revendication 1, **caractérisé en ce que** le premier convertisseur de tension à découpage (GS1) est réalisé sous la forme d'un convertisseur en demi-pont.

5. Système de convertisseur de tension à découpage selon la revendication 1, **caractérisé en ce que** le premier convertisseur à découpage (GS1) est réalisé sous la forme d'un convertisseur à résonance.

6. Système de convertisseur de tension à découpage selon la revendication 1, **caractérisé en ce que** le deuxième convertisseur de tension à découpage (GS2) est réalisé sous la forme d'un régulateur série.

7. Système de convertisseur de tension à découpage selon la revendication 1, **caractérisé en ce que** le deuxième convertisseur de tension à découpage (GS2) est réalisé sous la forme d'un transformateur abaisseur.

8. Système de convertisseur de tension à découpage selon la revendication 1, **caractérisé en ce que** l'élément d'allumage (Z1) est réalisé sous la forme d'un thyristor.

9. Système de convertisseur de tension à découpage selon la revendication 1, **caractérisé en ce qu'**un redresseur pour l'utilisation du système de convertisseur de tension est connecté en amont à un réseau à courant alternatif.
